# EUROPEAN PATENT SPECIFICATION

(11) **EP 3 995 460 B1**
(45) Date of publication and mention of the grant of the patent: **17.06.2026**
(21) Application number: 20909100.8
(22) Date of filing: 10.12.2020
(51) Int. Cl.: C03B 19/12, C03B 8/02, C03C 1/00

(54) **METHOD FOR PREPARING MICRO-OPTICAL GLASS DEVICE**
VERFAHREN ZUR HERSTELLUNG EINER MIKROOPTISCHEN GLASVORRICHTUNG
PROCÉDÉ DE PRÉPARATION D'UN DISPOSITIF MICRO-OPTIQUE EN VERRE

(30) Priority: 31.12.2019 CN 201911414447
(43) Date of publication of application: 11.05.2022
(73) Proprietor: YLX Incorporated, Shenzhen, Guangdong 518000 (CN)
(72) Inventor: LIU, Yingying, Guangdong 518000 (CN); LI, Qian, Guangdong 518000 (CN); CHEN, Yusan, Guangdong 518000 (CN)
(74) Representative: Studio Torta S.p.A.
(86) International application number: PCT/CN2020/135096
(87) International publication number: WO 2021/135882

(56) References cited:
- CN-A- 101 065 334
- CN-A- 101 456 665
- CN-A- 101 511 746
- CN-A- 102 112 408
- JP-A- H07 277 743
- US-A- 4 883 521
- US-A1- 2002 157 419

## Description

### TECHNICAL FIELD

The present disclosure relates to the field of glass manufacturing technologies, and particularly, to a method for manufacturing a micro-optical glass device.

### BACKGROUND

In recent years, with the rapid development of optical design technologies in the projection field, large and cumbersome projectors have gradually been replaced by portable projectors with compact structures and small sizes. Moreover, projection technologies have a trend to further migrate to smart terminals such as mobile phones and smart glasses. Concomitantly, the reduction of the volume of the optical engine and the reduction of the spot size have put forward higher and higher requirements for fine shaping and modulation of light beams. Moreover, with the popularization of high-brightness laser light sources, since optical components have to withstand higher and higher thermal energy under the conditions of the above-mentioned fine shaping and modulation of light beams, they have higher requirements for heat resistance. Resin optical devices can no longer meet the design requirements of the current optical engine, and glass optical devices have become a compulsory option.

When preparing micro-optical devices, e.g., micro lens arrays, the method of processing (e.g., polishing) microstructures on a whole piece of glass has features of high equipment cost and difficult processing, which is not conducive to mass production. The sol-gel method is a relatively economical manufacturing method. The traditional sol-gel process with high solid content and low shrinkage rate is suitable for manufacturing large-sized glass devices. Due to the mold processing size, it is impossible to directly produce micron-level fine optical structures. For this purpose, Patent CN1761626A proposed a method for manufacturing fine glass structure by multiple transfer printing. A large-size aluminum alloy mold is precisely processed by a high-precision diamond lathe, and then an antisymmetric structure is copied by silicon rubber imprinting. A sol is injected into this silicone rubber mold to mold, the molded glass product (compared with the aluminum alloy mold, having a certain multiple of volume shrinkage) is sintered, and then is used as a mold to imprint the silicone rubber mold with the antisymmetric structure made of silicone rubber, and so on. A micron-level fine glass structure is achieved by multiple transfers. However, this technical solution requires an excessively high material cost and time cost, which is unbearable for the consumer-grade micro-projection system with small profits but quick turnover. Therefore, a more economical manufacturing method of micro-optical glass devices is urgent to develop.

CN101511746 discloses a sol-gel process for the production of large glass monoliths, whereby tetraalkoxysilane is added to a dispersion of pyrogenically produced silica and the ratio of SiO 2 :TEOS is 2.6 to 5.5:1.

CN101065334 discloses aquagels, formed from acid catalized composite sols prepared by a process that hydrolyzes the silicon alkoxides in presence of fumed silica. The aquagel can be used for the production of monoliths of glass.

### SUMMARY

In view of the high cost and complicated process of the related art, the present disclosure provides a low-cost, simple process for manufacturing a micro-optical glass device. The method includes following steps: step 1: obtaining a silica dispersion liquid into which an acidic solution is added to adjust pH value of the silica dispersion liquid while being stirred; step 2: adding tetraethyl orthosilicate into the silica dispersion liquid and stirring the same to obtain a sol into which an alkaline solution is added to adjust pH value of the sol while being stirred and then leaving it to stand; step 3: injecting the stood sol into a mold and aging to obtain a wet gel; step 4: demolding, washing and drying the wet gel to obtain a dried gel; and step 5: sintering the dried gel to obtain a micro-optical glass device. Raw materials have a solid content of silica equal to or greater than 20.3% and equal to or less than 25.5%; and the solid content refers to a mass percentage of silica in a raw material including silica obtained from hydrolysis of tetraethyl orthosilicate in a total raw material.

In an embodiment, the step 1 includes: obtaining a silica dispersion liquid stock solution with a preset molar volume, mixing the silica dispersion liquid stock solution with deionized water to obtain the silica dispersion liquid, the deionized water being configured to adjust the solid content of silica.

In an embodiment, in the raw materials, a molar ratio of the silica contained in the silica dispersion liquid to the tetraethyl orthosilicate is within a range from 2.8 to 4.7.

In an embodiment, the molar ratio of the silica contained in the silica dispersion liquid to the tetraethyl orthosilicate is within a range from 3.8 to 4.7.

In an embodiment, in the step 1, the acidic solution is a hydrochloric acid solution, and the silica dispersion liquid has a pH value ranging from 1.3 to 2.8. after its pH value is adjusted.

In an embodiment, in the step 2, the alkaline solution is an aqueous ammonia solution, and the sol has a pH value ranging from 2.5 to 5 after its pH value is adjusted.

In an embodiment, the mold is a silicone mold.

In an embodiment, in the step 5, a sintering temperature is not higher than 1100°C.

Compared with the related art, the present disclosure includes following beneficial effects. By using raw materials with a low solid content of silica to manufacture the micro-optical glass device by the sol-gel method, the glass with a large shrinkage rate can be manufactured, and the glass device with surface micro-optical structure can be manufactured at one time, so that the multiple transfers manner with low shrinkage rate can be avoided, thereby greatly reducing the cost and simplifying the process.

### BRIEF DESCRIPTION OF THE DRAWINGS

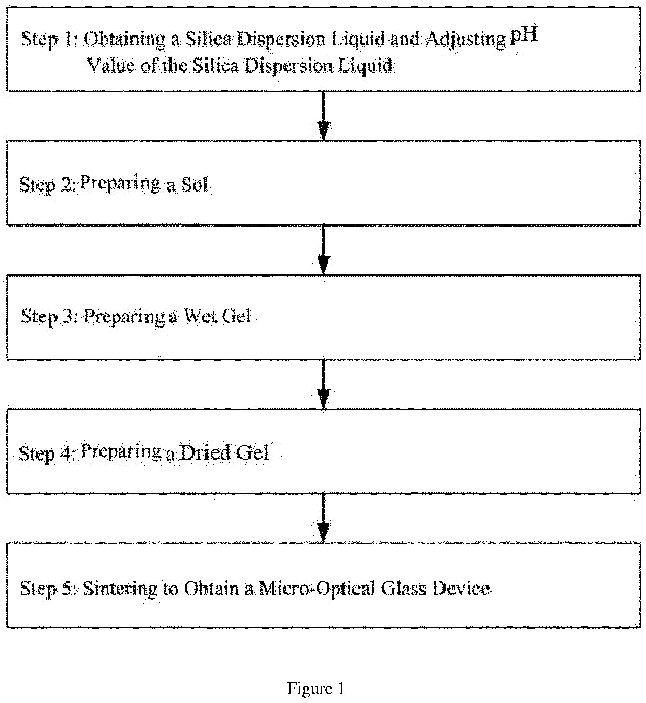

FIG. 1 is a schematic flow chart of a method for manufacturing a micro-optical glass device according to an embodiment of the present disclosure.

### DESCRIPTION OF THE EMBODIMENTS

The embodiments of the present disclosure will be described in detail below in conjunction with the drawing and examples.

In the present disclosure, a main inventive concept is to control raw materials for manufacturing a glass device by a sol-gel method. By combining two silica sources while controlling a solid content of silica, the solid content of raw materials is relatively low, so that a large shrinkage rate by sol-gel method can be achieved, thereby breaking through the limitation of sol-gel method under the high solid content in the past. Furthermore, by controlling a ratio of two silica sources, a yield problem of manufacturing under low solid content can be solved.

The solid content in the present disclosure refers to a mass percentage of silica in the raw materials (including silica obtained from hydrolysis of tetraethyl orthosilicate) in the total raw materials.

FIG. 1 is a schematic flow chart of a method for manufacturing a micro-optical glass device according to an embodiment of the present disclosure. As shown in FIG. 1, the method includes: step 1, obtaining a silica dispersion liquid, and adjusting its pH value; step 2, preparing a sol; step 3, preparing a wet gel; step 4, preparing a dried gel; step 5, sintering to obtain the micro-optical glass device. Each step is described in detail below.

### <Step 1>

Step 1 includes: obtaining a silica dispersion liquid into which an acidic solution is added to adjust pH value of the silica dispersion liquid while being stirred, and finally obtaining a silica dispersion liquid with a preset pH value as a first silica source.

In the present disclosure, an initial silica dispersion liquid (that is, its pH value is not adjusted) can be obtained by mixing and stirring fumed silica with deionized water, and dispersing by magnetic stirring, homogenizer, and/or ultrasonic to evenly disperse the fumed silica in water. Subsequently, the silica dispersion liquid was filtered to remove impurities and undispersed agglomerated particles.

The fumed silica in the present disclosure has D50 having a particle size in a range of 20 nm to 150 nm, and has a relatively large specific surface area.

Generally, to ensure the uniformity of the silica dispersion liquid, a relatively long time is required for the above-mentioned treatment process, resulting in a longer time for each production. Therefore, in an embodiment of the present disclosure, a large amount of the silica dispersion liquid stock solution with a preset molar volume was prepared in advance. A certain amount of the silica dispersion liquid stock solution is obtained upon each production, and mixed with deionized water to dilute. Deionized water is used to adjust the solid content of silica, so as to obtain the silica dispersion liquid of this production batch. In this technical solution, the adjustment of the solid content of silica is simple, the time required for uniform mixing is reduced, and it is not necessary to filter and remove impurities every time, thereby improving production efficiency and the stability of raw materials in different production batches.

An acidic solution was added into the silica dispersion liquid while being stirred uniformly. The acidic solution can be, for example, a diluted hydrochloric acid solution, so that the pH value of the silica dispersion liquid can be adjusted from 1.3 to 2.8. It can be understood that the acidic solution may also be other acidic solutions for adjusting the pH value.

### <Step 2>

After the acidic silica dispersion liquid was obtained, tetraethyl orthosilicate was added into the silica dispersion liquid while being stirred, and then was hydrolyzed to obtain a sol. An alkaline solution was further added into the sol to adjust the pH value of the sol, and then the sol was stirred and stood. During the standing process, the sol was begun to gradually form a gel. This process should not be excessively long, and a short time was only required to stand to discharge the bubbles during the stirring process.

In an embodiment of the present disclosure, the alkaline solution may be an aqueous ammonia solution. After the pH value of the sol was adjusted, the pH value was increased to finally be 2.5 to 5. It can be understood that the alkaline solution may also be other alkaline solutions for adjusting pH value.

### <Step 3>

The sol after being stood was injected into a mold and aged to obtain a wet gel.

In this step, the mold can be of various shapes and sizes as required, so that glass optical devices of various shapes and sizes can be obtained. After being aged, the wet gel has a certain strength and can be demolded from the mold. In order to facilitate demolding, the present disclosure preferably adopts a silicone mold, which can peel off the wet gel within a certain deformation range of the silicone mold. If a rigid mold was used, on the one hand, it may damage a fine optical surface structure, causing burrs and cracks, and on the other hand, it was not easy to demold the wet gel.

### <Step 4>

The wet gel was demolded, washed and dried to obtain a dried gel.

After being demolded, a wet gel block with transfer fine structure was obtained. The wet gel block that has certain uneven impurities was cleaned to remove surface impurities, thereby obtaining a product with higher transparency.

When the wet gel block was dried, the temperature should not be too high, otherwise excessive dehydration may be occurred to cause the sample to crack.

After being dried, a dried gel block with a reduced volume relative to the wet gel block was obtained. In the step of manufacturing the micro-optical glass device, the volume shrinkage is mainly occurred in the drying step, and volume shrunk in this step occupies the main part of the volume shrunk in the whole manufacturing process.

### <Step 5>

The dried gel was sintered to obtain the micro-optical glass device. In this step, the sample was subjected to second volume shrinkage and was turned from an opaque glass device to a transparent glass device.

Generally, in a sol-gel method for manufacturing optical glass in the related art, sintering needs to be performed at a temperature greater than 1200°C. The inventor found that sintering at high temperatures may damage edges and surfaces of the optical glass device, causing the optical glass device to be slightly deformed or even cracked. In traditional larger-size optical glass devices (e.g., millimeter-level optical devices), such surface defects do not matter. However, the above surface defects of the micro-optical glass devices will seriously affect the optical performance of the device. In the present disclosure, the inventor found that by reducing the solid content of silica in the raw materials, an optical device with high transparency can be obtained even if the sintering temperature was lowered. In a preferred embodiment of the present disclosure, the sintering temperature was not higher than 1100°C, so that it not only protects the micro-optical structures of the glass surface from cracking, but also reduces the risk of internal crystallization and decreased transparency at low solid content, thereby improving product yield. In addition, the reduction of sintering temperature can further reduce energy consumption and production cost.

The manufacturing steps are described in detail above. Please refer to specific examples below. In order to facilitate the comparison of effects of various technical solutions, different solid content and silica source proportions are selected under the same experimental conditions for comparative analysis.

### Example

First, the fumed silica particles and deionized water were weighed, mixed and stirred to disperse evenly by using a homogenizer; dilute hydrochloric acid was added, the pH value was adjusted to 2 while being stirred. Tetraethyl orthosilicate was then added to obtain a mixture, and the mixture was stirred to form a sol solution. Then, ammonia water was added to adjust the pH value of the sol solution to 4, the mixture was stirred and stood, and then injected into a mold with microstructures, and then gelled after 10 hours and demolded after 48 hours to form a wet gel.

The above-mentioned wet gel with microstructure was placed in pure deionized water, and washed with circulating water, then placed it in a constant temperature and humidity box at 45°C to dry. The dried gel was sintered at 1050°C for 12 hours to obtain an optical device with microstructures.

The data table of various examples and comparative examples was shown in the table below. The explanation of the solid content can refer to the above description. The proportion was a ratio of moles of silica (SiO₂) contained in the fumed silica particles or silica dispersion liquid stock solution to moles of tetraethyl orthosilicate TEOS. The shrinkage rate was a volume shrinkage rate of the sintered glass device relative to the demolded gel, which can be measured by an Archimedes method. The yield implies products without cracks, scratches, dirt, bubbles, and extremely low transmittance.

| Solid content | Ratio (n_{SiO2}/n_{TEOS}) | Shrinkage rate | Yield |
|---|---|---|---|
| 35.0% | 5.0 | 73.43% | 100% |
| 25.5% | 3.8 | 86.80% | 60% |
| 25.3% | 4.7 | 86.88% | 100% |
| 25.3% | 4.1 | 86.88% | 90% |
| 25.0% | 3.8 | 87.50% | 60% |
| 24.3% | 4.1 | 88.03% | 89% |
| 20.3% | 3.8 | 89.10% | 60% |
| 15.3% | 2.8 | 90.30% | 40% |

According to the data of the table above, it can be seen that the solid content has a significant effect on the shrinkage rate. To obtain the possible finest size of optical glass devices, it is necessary to reduce the solid content of silica in the raw materials. In the present disclosure, the solid content of silica in the raw materials was not more than 25.5%. Preferably, the solid content of silica in the raw materials was not more than 25%.

The inventor found that in the present disclosure, the proportion of two different silica sources has a huge impact on the product yield and the production time. At the same proportion, for example, n_{SiO2}/n_{TEOS}=3.8, the solid content has little effect on the product yield (all around 60%), which only has a significant impact on the shrinkage rate. Therefore, determining the proportion of the two silica sources was of great significance to the actual mass production of products.

Tetraethyl orthosilicate (TEOS) contributes to the gelation process. If only silica dispersion liquid was used as the silica source, the gelation process was extremely slow and cannot be used in mass production of products. As the amount of tetraethyl orthosilicate is increased, the required gelation time was gradually shortened. According to the inventor's research, a molar ratio n_{SiO2}/n_{TEOS} of silica contained in the silica dispersion liquid to tetraethyl orthosilicate is smaller than 4.7, which can meet the requirement of mass production.

However, excessively much tetraethyl orthosilicate may cause the gel to crack when it shrinks. It can be seen from the data in the table that, the yield is gradually decreased with the decrease of n_{SiO2}/n_{TEOS}. When n_{SiO2}/n_{TEOS} reaches as low as 2.8, the yield has been reduced to 40%, so that the ratio smaller than 2.8 has little economic value.

In the present disclosure, a 100% yield solution is not necessary. The yield and production time are required to be considered comprehensively. A higher yield often represents a longer gelation time, as long as the number of good products per unit time was higher.

Therefore, in the present disclosure, a molar ratio of silica in the silica dispersion liquid to tetraethyl orthosilicate contained was within a range from 2.8 to 4.7. Preferably, the molar ratio of silica in the silica dispersion liquid to tetraethyl orthosilicate contained was within a range from 3.8 to 4.7 to ensure a yield greater than 60%.

The various examples in this specification are described in a progressive manner. The description for each example focuses on the differences from other embodiments, and the same or similar parts among various examples can be referred to each other.

## Claims

1. A method for manufacturing a micro-optical glass device, comprising:
step 1: obtaining a silica dispersion liquid into which an acidic solution is added to adjust a pH value of the silica dispersion liquid while stirring;
step 2: adding tetraethyl orthosilicate into the silica dispersion liquid and stirring to obtain a sol into which an alkaline solution is added, to adjust a pH value of the sol while stirring, and leaving it to stand;
step 3: injecting the stood sol into a mold and aging the same to obtain a wet gel;
step 4: demolding, washing and drying the wet gel to obtain a dried gel; and
step 5: sintering the dried gel to obtain the micro-optical glass device,
wherein raw materials have a solid content of silica equal to or greater than 20.3% and equal to or less than 25.5%; and
the solid content refers to a mass percentage of silica in the raw materials including silica obtained from hydrolysis of tetraethyl orthosilicate in the total raw materials.

2. The method according to claim 1, wherein, the step 1 comprises: obtaining silica dispersion liquid stock solution with a preset molar volume, mixing the silica dispersion liquid stock solution with deionized water to obtain the silica dispersion liquid, the deionized water being configured to adjust the solid content of silica.

3. The method according to any one of claim 1 to 2, wherein in the raw materials, a molar ratio of the silica contained in the silica dispersion liquid to the tetraethyl orthosilicate is within a range from 2.8 to 4.7.

4. The method according to any one of claim 1 to 3, wherein the molar ratio of the silica contained in the silica dispersion liquid to the tetraethyl orthosilicate is within a range from 3.8 to 4.7.

5. The method according to any one of claims 1 to 4, wherein, in the step 1, the acidic solution is hydrochloric acid solution, and the silica dispersion liquid has a pH value ranging from 1.3 to 2.8 after its pH value is adjusted.

6. The method according to any one of claims 1 to 5, wherein, in the step 2, the alkaline solution is aqueous ammonia solution, and the sol has a pH value ranging from 2.5 to 5 after its pH value is adjusted.

7. The method according to any one of claims 1 to 6, wherein the mold is a silicone mold.

8. The method according to any one of claims 1 to 7, wherein, in the step 5, a sintering temperature is not higher than 1100°C.

## Patentansprüche

1. Verfahren zum Herstellen einer mikrooptischen Glasvorrichtung, umfassend:
Schritt 1: Erhalten einer Siliciumdioxiddispersionsflüssigkeit, in die eine saure Lösung zugegeben wird, um einen pH-Wert der Siliciumdioxiddispersionsflüssigkeit unter Rühren anzupassen;
Schritt 2: Zugeben von Tetraethylorthosilicat in die
Siliciumdioxiddispersionsflüssigkeit und Rühren, um ein Sol zu erhalten, in das eine alkalische Lösung zugegeben wird, um einen pH-Wert des Sols unter Rühren anzupassen, und Stehenlassen;
Schritt 3: Einspritzen des stehen gelassenen Sols in eine Form und Altern desselben, um ein Nassgel zu erhalten;
Schritt 4: Entformen, Waschen und Trocknen des Nassgels, um ein getrocknetes Gel zu erhalten; und
Schritt 5: Sintern des getrockneten Gels, um die mikrooptische Glasvorrichtung zu erhalten,
wobei Rohmaterialien einen Feststoffgehalt an Siliciumdioxid von gleich oder größer als 20,3 % und gleich oder kleiner als 25,5 % aufweisen; und
der Feststoffgehalt sich auf einen Massenanteil von Siliciumdioxid in den Rohmaterialien bezieht, die das Siliciumdioxid einschließen, das aus einer Hydrolyse von Tetraethylorthosilicat in den gesamten Rohmaterialien erhalten wird.

2. Verfahren nach Anspruch 1, wobei der Schritt 1 umfasst: Erhalten einer Stammlösung der Siliciumdioxiddispersionsflüssigkeit mit einem voreingestellten Molvolumen, Mischen der Stammlösung der Siliciumdioxiddispersionsflüssigkeit mit deionisiertem Wasser, um die Siliciumdioxiddispersionsflüssigkeit zu erhalten, wobei das deionisierte Wasser konfiguriert ist, um den Feststoffgehalt von Siliciumdioxid anzupassen.

3. Verfahren nach einem der Ansprüche 1 bis 2, wobei in den Rohmaterialien ein Molverhältnis des Siliciumdioxids, das in der
Siliciumdioxiddispersionsflüssigkeit enthalten ist, zu dem Tetraethylorthosilicat innerhalb eines Bereichs von 2,8 bis 4,7 liegt.

4. Verfahren nach einem der Ansprüche 1 bis 3, wobei das Molverhältnis des Siliciumdioxids, das in der Siliciumdioxiddispersionsflüssigkeit enthalten ist, zu dem Tetraethylorthosilicat innerhalb eines Bereichs von 3,8 bis 4,7 liegt.

5. Verfahren nach einem der Ansprüche 1 bis 4, wobei, in dem Schritt 1, die saure Lösung eine Salzsäurelösung ist und die Siliciumdioxiddispersionsflüssigkeit einen pH-Wert in dem Bereich von 1,3 bis 2,8 aufweist, nachdem ihr pH-Wert angepasst wird.

6. Verfahren nach einem der Ansprüche 1 bis 5, wobei, in dem Schritt 2, die alkalische Lösung eine wässrige Ammoniaklösung ist und das Sol einen pH-Wert in dem Bereich von 2,5 bis 5 aufweist, nachdem sein pH-Wert angepasst wird.

7. Verfahren nach einem der Ansprüche 1 bis 6, wobei die Form eine Silikonform ist.

8. Verfahren nach einem der Ansprüche 1 bis 7, wobei, in dem Schritt 5, eine Sintertemperatur nicht höher als 1100 °C ist.

## Revendications

1. Procédé de fabrication d'un dispositif en verre micro-optique, comprenant :
étape 1 : l'obtention d'un liquide de dispersion de silice dans lequel une solution acide est ajoutée pour ajuster une valeur de pH du liquide de dispersion de silice tout en agitant ;
étape 2 : l'ajout d'orthosilicate de tétraéthyle dans le liquide de dispersion de silice et l'agitation pour obtenir un sol dans lequel une solution alcaline est ajoutée, pour ajuster une valeur de pH du sol tout en agitant, et le laisser reposer ;
étape 3 : l'injection du sol reposé dans un moule et le vieillissement de celui-ci pour obtenir un gel humide ;
étape 4 : le démoulage, le lavage et le séchage du gel humide pour obtenir un gel séché ; et
étape 5 : le frittage du gel séché pour obtenir le dispositif en verre micro-optique,
dans lequel les matières premières ont une teneur en matières solides de silice égale ou supérieure à 20,3 % et égale ou inférieure à 25,5 % ; et
la teneur en matières solides fait référence à un pourcentage massique de silice dans les matières premières, y compris de la silice obtenue par hydrolyse de l'orthosilicate de tétraéthyle, par rapport au total des matières premières.

2. Procédé selon la revendication 1, dans lequel l'étape 1 comprend :
l'obtention d'une solution mère de liquide de dispersion de silice avec un volume molaire prédéfini, le mélange de la solution mère de liquide de dispersion de silice avec de l'eau déionisée pour obtenir le liquide de dispersion de silice, l'eau déionisée étant conçue pour ajuster la teneur en solides de la silice.

3. Procédé selon l'une quelconque des revendications 1 à 2, dans lequel, dans les matières premières, un rapport molaire entre la silice contenue dans le liquide de dispersion de silice et l'orthosilicate de tétraéthyle est compris entre 2,8 et 4,7.

4. Procédé selon l'une quelconque des revendications 1 à 3, dans lequel le rapport molaire entre la silice contenue dans le liquide de dispersion de silice et l'orthosilicate de tétraéthyle est compris entre 3,8 et 4,7.

5. Procédé selon l'une quelconque des revendications 1 à 4, dans lequel, à l'étape 1, la solution acide est une solution d'acide chlorhydrique, et le liquide de dispersion de silice a une valeur de pH allant de 1,3 à 2,8 après ajustement de sa valeur de pH.

6. Procédé selon l'une quelconque des revendications 1 à 5, dans lequel, à l'étape 2, la solution alcaline est une solution aqueuse d'ammoniac, et le sol a une valeur de pH allant de 2,5 à 5 après ajustement de sa valeur de pH.

7. Procédé selon l'une quelconque des revendications 1 à 6, dans lequel le moule est un moule en silicone.

8. Procédé selon l'une quelconque des revendications 1 à 7, dans lequel, à l'étape 5, une température de frittage n'est pas supérieure à 1100 °C.
